# EUROPEAN PATENT SPECIFICATION

(11) **EP 3 902 658 B1**
(45) Date of publication and mention of the grant of the patent: **04.11.2026**
(21) Application number: 18944362.5
(22) Date of filing: 24.12.2018
(51) Int. Cl.: B25J 9/16, G01M 13/045, G01M 13/028

(54) **METHOD FOR DIAGNOSING A ROBOT, DEVICE AND SERVER**
VERFAHREN ZUR DIAGNOSE EINES ROBOTERS, VORRICHTUNG UND SERVER
PROCÉDÉ DE DIAGNOSTIC D'UN ROBOT, DISPOSITIF ET SERVEUR

(43) Date of publication of application: 03.11.2021
(73) Proprietor: ABB Robotics Schweiz AG, 8050 Zürich (CH)
(72) Inventor: SUN, Heqing, Shanghai 201100 (CN); ZHANG, Jiafan, Shanghai 200092 (CN)
(74) Representative: Zimmermann & Partner Patentanwälte mbB
(86) International application number: PCT/CN2018/123237
(87) International publication number: WO 2020/132837

(56) References cited:
- WO-A2-2012/099342
- CN-A- 105 095 918
- CN-A- 105 415 374
- CN-A- 105 415 374
- CN-A- 108 058 188
- JP-A- H08 190 412
- US-A1- 2014 201 571
- US-A1- 2015 160 101
- US-A1- 2018 335 366
- US-B2- 8 121 729

## Description

### TECHNICAL FIELD

Example embodiments of the present disclosure generally relate to robot diagnosis and more particularly, to a method for diagnosing a robot, device and server.

### BACKGROUND

Robots play important parts in modern industries since they are able to work faster, more precise and run longer than us human beings. With more robots operating automatically, it is more and more important to discover faults that may cause losses in performances or even plant downtime as early as possible in order to minimize impact on the users' operation.

The main solutions in the prior art focus on robot abnormality detection on system level to diagnose a local robot. However, these solutions identify the failure source only based on the historical data of the local robot, which makes the diagnosis result inaccurate and thus unconvincing. For instance, patent applications US 2014/201571 A1, US 2018/335366A1, or US 2015/160101 A1 refer to local diagnostic systems for robots.

In addition, other solutions in the prior art provide remote monitoring through sending the raw data of local robots to a remote server. For instance, patent US 8 121 729 B2 refers to a remote diagnostic system for robots. A controller of each robot of the system is locally connected to a service unit provided with local processing power. Further, a remote service center provided with a connector server is arranged. A communications infrastructure for transferring information between a controller of a robot of the system and the connector server via the service unit is arranged for performing remote monitoring and diagnostics at the remote service center, wherein the communications infrastructure uses internet and/or GPRS communication lines. The US patent further describes compressing data for enabling a cost efficient way to transmit the data from the robot to the server. Patent application CN 105 415 374 A refers to a mechanical hand transmission unit on-line fault diagnosis system based on synergetic measurement, and belongs to the field of fault diagnosis. The system includes a vibration sensor, a data acquisition repeater, a robot RTU (remote terminal unit) and an on-line fault diagnosis subsystem. The vibration sensor acquires vibration acceleration and motion angular velocity data through adopting an acceleration sensor and a gyroscope, and transfers the acceleration and motion angular velocity data to the data acquisition repeater. The data is subjected to smooth filtering, and the data subjected to smooth filtering is transferred to the robot RTU through a Wi-Fi module. The robot RTU reads the motion control parameters of corresponding joints from a robot controller, calculates the space attitude data of the joints of a mechanical hand, and performs data fusion through using the Kalman filtering algorithm. The on-line fault diagnosis subsystem compares the initial two-dimensional inherent vibration characteristics, acquired during the ex-factory assessment and test stage of a mechanical hand product, of the joints of the mechanical hand with the current two-dimensional inherent vibration characteristics, and performs fault diagnosis. The mechanical hand transmission unit on-line fault diagnosis system has important functions in the field of fault diagnosis of variable speed servo mechanical hands. However, some users are reluctant to share their robot data, which could be part of their business secret.

### SUMMARY

The present disclosure provides a method for diagnosing a robot according to claim 1. The invention is set out in the appended set of claims.

In some embodiments, preprocessing the first signal comprises: segmenting the first signal in a time domain into a plurality of parts; and selecting at least one of the plurality of parts to send to the server.

In some embodiments, preprocessing the first signal comprises: resampling the first signal with a sampling rate based on a speed of the rotating component; segmenting the resampled first signal into a plurality of parts; and selecting at least one of the plurality of parts to send to the server.

In some embodiments, preprocessing the first signal comprises: determining a spectrum of the first signal; segmenting the spectrum into a plurality of parts; and selecting at least one of the plurality of parts to send to the server.

In some embodiments, the motion information indicates at least one of the following: a rotational speed of the rotating component; a control current of the rotating component; a torque of the rotating component; and an acceleration of the rotating component.

In some embodiments, the sub-component comprises at least one of following part: a gear of a gearbox; a shaft of a motor; and a bearing of the motor or gearbox.

In an example useful for understanding the invention, a method for diagnosing a robot is provided. The method comprises: receiving a first signal or spectrum information about the first signal from a robot, the first signal at least comprising motion information of a rotating component; obtaining a frequency amplitude of a sub-component of the rotating component based on the received first signal or the received spectrum information; detecting a failure of the sub-component by comparing the frequency amplitude with a threshold amplitude; and sending a second signal to the robot, the second signal comprising diagnostic information indicating whether the sub-component of the rotating component has a failure.

In some embodiments, the physical characteristic comprises one or more structural parameters and/or one or more dimensional parameters of the sub-component.

In some embodiments, the threshold amplitude is empirically predetermined.

In some embodiments, the threshold amplitude is determined by machine self-learning.

In a third aspect, example embodiments of the present disclosure provide a device as claimed by claim 9.

In a fourth aspect, example embodiments of the present disclosure provide a server as claimed in claim 13.

### BRIEF DESCRIPTION OF THE DRAWINGS

Through the following detailed descriptions with reference to the accompanying drawings, the above and other objectives, features and advantages of the example embodiments disclosed herein will become more comprehensible. In the drawings, several example embodiments disclosed herein will be illustrated in an example and in a non-limiting manner, wherein:
Fig. 1 shows a block diagram illustrating a system for diagnosing the robot in accordance with some example embodiments of the present disclosure;
Fig. 2 shows a swim lane chart illustrating a process for diagnosing the robot in accordance with some example embodiments of the present disclosure;
Fig. 3 illustrates flowchart of a method for diagnosing a robot implemented at a local device in accordance with some example embodiments of the present disclosure;
Fig. 4 illustrates flowchart of a method for diagnosing a robot implemented at a remote server in accordance with some example embodiments of the present disclosure;
Fig. 5 illustrates a diagram showing a waveform of motion signal before and after preprocessing in accordance with some example embodiments of the present disclosure; and
Fig. 6 illustrates a diagram showing a spectrum of motion signal in accordance with some example embodiments of the present disclosure.

Throughout the drawings, the same or corresponding reference symbols refer to the same or corresponding parts.

### DETAILED DESCRIPTION

The subject matter described herein will now be discussed with reference to several example embodiments. These embodiments are discussed only for the purpose of enabling those skilled persons in the art to better understand and thus implement the subject matter described herein, rather than suggesting any limitations on the scope of the subject matter.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "being operable to" is to mean a function, an action, a motion or a state can be achieved by an operation induced by a user or an external mechanism. The term "one embodiment" and "an embodiment" are to be read as "at least one embodiment." The term "another embodiment" is to be read as "at least one other embodiment."

Unless specified or limited otherwise, the terms "mounted," "connected," "supported," and "coupled" and variations thereof are used broadly and encompass direct and indirect mountings, connections, supports, and couplings. Furthermore, "connected" and "coupled" are not restricted to physical or mechanical connections or couplings. In the description below, like reference numerals and labels are used to describe the same, similar or corresponding parts in the Figures. Other definitions, explicit and implicit, may be included below.

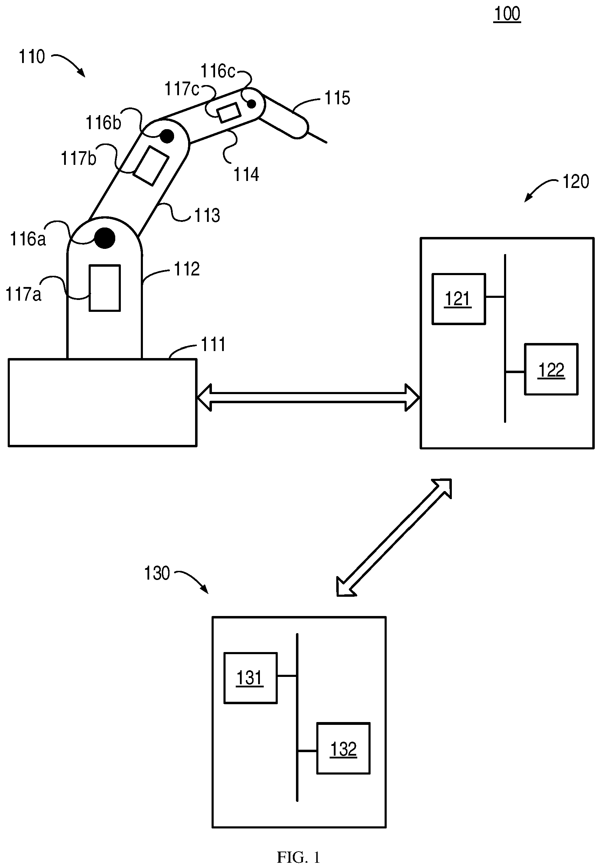

Fig. 1 shows a block diagram illustrating a system 100 for diagnosing the robot in accordance with some example embodiments of the present disclosure. The system comprises an industrial robot 110, a local device 120 and a remote server 130. The robot 110 comprises a base 111, three arms 112, 113, 114 and a tool holder 115. The arms 113, 114 and the tool holder 115 are rotatable about a plurality of joints 116a-116c. The industrial robot also comprises a plurality of actuator 117a-117c for driving the movements of the arms 112, 113, 114. Each actuator 117a-117c comprises a motor including a motor shaft and a transmission unit configured to transfer rotational movements of the motor shaft to the joints. Each transmission unit comprises a gear and a gear shaft.

The industrial robot 110 is connected to a local device 120 for executing robot program, which comprises a controller 121 and a memory 122. The memory 122 is coupled to the controller 121 and storing machine-executable instructions. The device 120 may be configured to transmit a control signal to the industrial robot 110 to control the operation of the actuator 117a-117c of the industrial robot 110, such as the rotation of the motor in the actuator 117a-117c. At the same time, the device 120 can also be configured to receive feedback signals from the industrial robot 110 to monitor and diagnose the operation state of the industrial robot 110.

The local device 120 is communicated with the remote server 130, which also comprises a controller 131 and a memory 132. The memory 132 is coupled to the controller 131 and storing machine-executable instructions. The server 130 may comprise storage for stored the received data from local devices.

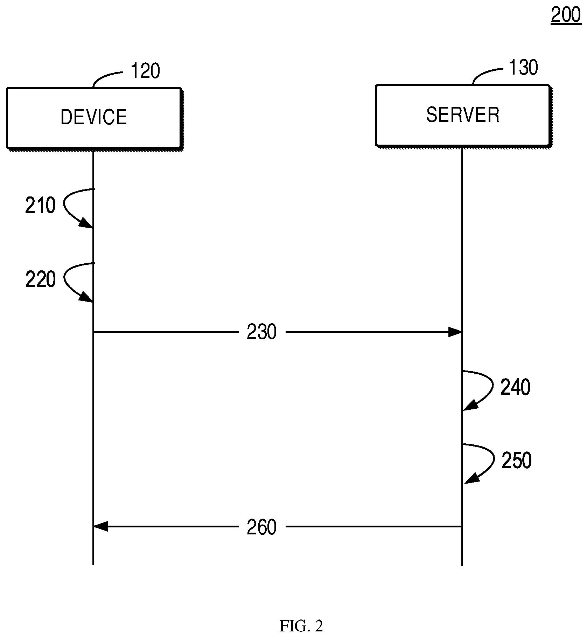

Fig. 2 shows a swim lane chart illustrating a process 200 for diagnosing the robot in accordance with some example embodiments of the present disclosure. For the purpose of discussion, the process 200 will be described with reference to Fig. 1. The process 200 may involve the local device 120 and the remote server 130 as illustrated in Fig. 1.

At 210, the device 120 obtains a first signal. The first signal is generated by a rotating component of the robot 110 during operation of the robot 110, the first signal at least comprising motion information of the rotating component. The rotating component may be the actuator 117a-117c of the robot 110. The motion information may indicate a rotational speed of the rotating component, a control current of the rotating component, a torque of the rotating component, or an acceleration of the rotating component.

The first signal may be the signal of specific joint in a time interval during which the actuator 117a-117c is rotates. The first signal may be voltage or current measured by the sensors within the robot 110 and transmitted through the cable between the robot 110 and the device 120. The first signal could also be measured by external sensors installed on the robot, such as accelerometer.

At 220, the first signal is preprocessed by the device 120 to filter out a part of the motion information in the first signal. In this manner, the users can preprocess the raw data before uploading to the server 130, so as to mask or delete part of the raw data to protect the user's trade and technical secrets.

In some embodiments, preprocessing the first signal may comprise: segmenting the first signal in a time domain into a plurality of parts; and selecting at least one of the plurality of parts to send to the server. In this way, the preprocessing can be implemented in the time domain.

Preprocessing the first signal may comprise: resampling the first signal with a sampling rate based on a speed of the rotating component; segmenting the resampled first signal into a plurality of parts; and selecting at least one of the plurality of parts to send to the server. In this way, the impact of varying speed (which happens during acceleration and deceleration) can be removed, thereby improving the reliability and accuracy of spectrum analysis.

Preprocessing the first signal may comprise: determining a spectrum of the first signal; segmenting the spectrum into a plurality of parts; and selecting at least one of the plurality of parts to send to the server. In this way, the preprocessing can be implemented in the frequency domain.

Through extracting parts of the first signal, whether in the time domain or the frequency domain, the waveform of the first signal cannot be reproduced based on the parts uploaded to the server. In other words, some of the motion information of the robot can be masked.

Preprocessing the first signal may comprise: determining a spectrum of the first signal; and determining the spectrum information from the spectrum, wherein the spectrum information at least comprises a frequency amplitude of a sub-component of the rotating component based on a physical characteristics and a speed of the sub-component.

Through this manner, it is possible to transmit only the spectrum information required for the failure diagnosis, thereby reducing the amount of data transfer and protecting the user information. In particular, the local device 120 needs only transfer the value of frequency amplitude to the server 130, which further reducing the amount of data transfer and protecting the user information.

At 230, the local device 120 sends the preprocessed first signal to the remote server 130.

At 240, the remote server 130 obtains a frequency amplitude of a sub-component of the rotating component based on the received first signal or the received spectrum information.

Obtaining the frequency amplitude comprises: resampling the received first signal with a sampling rate based on a speed of the rotating component; and determining the frequency amplitude from a spectrum of the resampled first signal based on a physical characteristics and a speed of the sub-component.

The sampling rate may be determined based on the speed of the rotating component. For example, the sampling rate is proportional to the speed of the rotating component, so that more sample values are obtained when the speed is high. In this way, the impact of varying speed (which happens during acceleration and deceleration) can be removed, thereby improving the reliability and accuracy of spectrum analysis. The spectrum may be determined through Fourier transformation.

In this manner, it is possible to directly use the motion signal obtained during normal operation of the robot for failure diagnosis, rather than the motion signal from a specific operation mode, thereby avoiding the interruption of industrial production.

It should be understood that the above-described methods of obtaining the spectrum are merely exemplary and are not intended to limit the scope of the disclosure. For example, when the rotating component does not vary its speed, the obtained motion signal can be directly converted from the time domain into the frequency domain without resampling.

Obtaining the frequency amplitude comprises: determining the frequency amplitude from the received spectrum information based on a physical characteristics and a speed of the sub-component.

The rotating component may comprise a plurality of sub-components, which may be a gear or a bearing inside the gearbox, a shaft or a bearing of the motor, or other structural components in the actuator 117a-117c. The physical characteristic comprises one or more structural parameters and/or one or more dimensional parameters of the sub-component.

Based on the physics analysis, each sub-component of the rotating component has a characteristic frequency, which is dependent on the sub-component structural parameter and/or dimensional parameter, like gear tooth number, bearing ball number, and bearing inner/outer raceway diameter.

The characteristic frequency is further dependent on the rotation speed of the sub-component. For example, the characteristic frequency of a gear may be k*ω, where ω is the rotation speed and k is the structural/dimensional parameter of the gear.

Such parameters of the sub-components can be predetermined and stored in the device 120. The rotation speed of the sub-components can be directly measured by sensors or indirectly calculated through other measured data such as the angular position of the motor. Such measurement is usually included in the robot for normal operation, thereby no additional cost is increased.

Through the characteristic frequency of the sub-component, the frequency amplitude corresponding to the sub-component can be determined from the spectrum.

At 250, the server 130 detects a failure of the sub-component by comparing the frequency amplitude with a threshold amplitude.

By failure analysis of the robot 110, the frequency amplitude of each sub-component can be considered as an indicator, which indicates whether a sub-component of the rotating component in the robot 110 has a failure.

In this manner, it is possible to detect a failure on sub-assembly level in the robot, thereby more accurately determining the failure source. As a result, the user can be prompted earlier than before to perform appropriate repairs and replacements, which can extend the life of the robot.

In some embodiments, the threshold amplitude is empirically predetermined.

In some embodiments, the threshold amplitude is determined by machine self-learning.

Due to fact that the server 130 may collect a large amount of data, and the data have been identified or marked as "good" (for no failure) or "bad" (for failure), a self-learning method such as neural network could be applied to learn the optimal threshold amplitudes for different working condition, like speed and payload.

In some embodiments, detecting the failure may comprise: in response to the frequency amplitude exceeding the threshold amplitude, detecting that the sub-component has the failure.

At 260, the remote server 130 sends a second signal to the local device 120. The second signal comprises diagnostic information indicating whether the sub-component of the rotating component has a failure.

After receiving the second signal from the server 130, the local device may display the diagnostic results to the user, for example, via a graphical user interface, allowing the user to visually identify the failure source and take appropriate action.

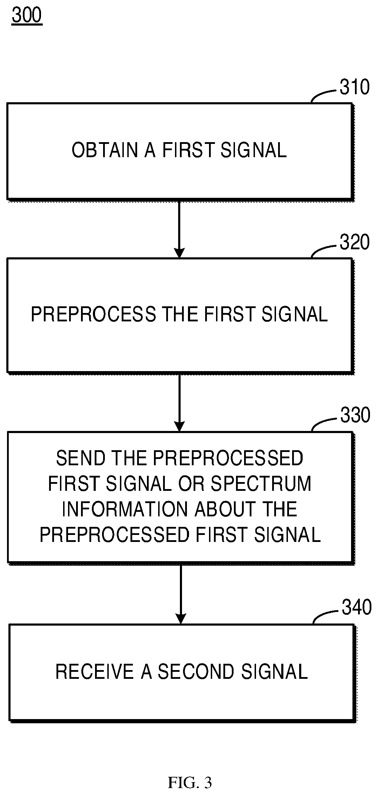

Fig. 3 illustrates flowchart of a method for diagnosing a robot implemented at a local device in accordance with some example embodiments of the present disclosure.

At 310, a first signal is obtained which is generated by a rotating component of the robot during operation of the robot. The first signal at least comprises motion information of the rotating component.

At 320, the first signal is preprocessed to filter out a part of the motion information in the first signal.

At 330 , the preprocessed first signal or spectrum information about the preprocessed first signal is sent to a server for diagnosing the robot.

At 340, a second signal is received from the server. The second signal comprises diagnostic information indicating whether a sub-component of the rotating component has a failure.

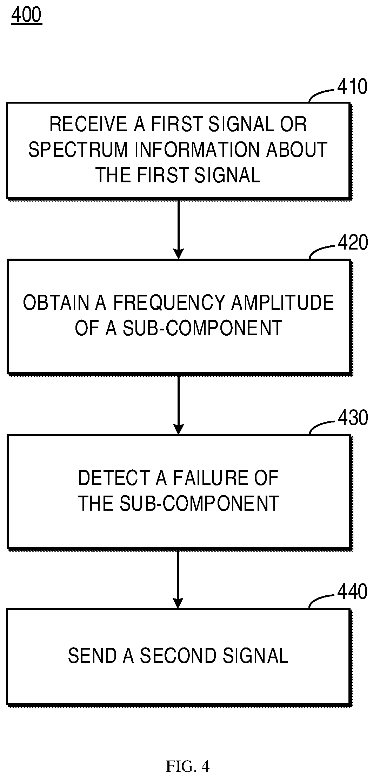

Fig. 4 illustrates flowchart of a method for diagnosing a robot implemented at a remote server in accordance with some example embodiments of the present disclosure.

At 410, a first signal or spectrum information about the first signal is received from a robot. The first signal at least comprises motion information of a rotating component.

At 420, a frequency amplitude of a sub-component of the rotating component is obtained based on the received first signal or the received spectrum information.

At 430, a failure of the sub-component is detected by comparing the frequency amplitude with a threshold amplitude.

At 440, a second signal is sent to the robot. The second signal comprises diagnostic information indicating whether the sub-component of the rotating component has a failure.

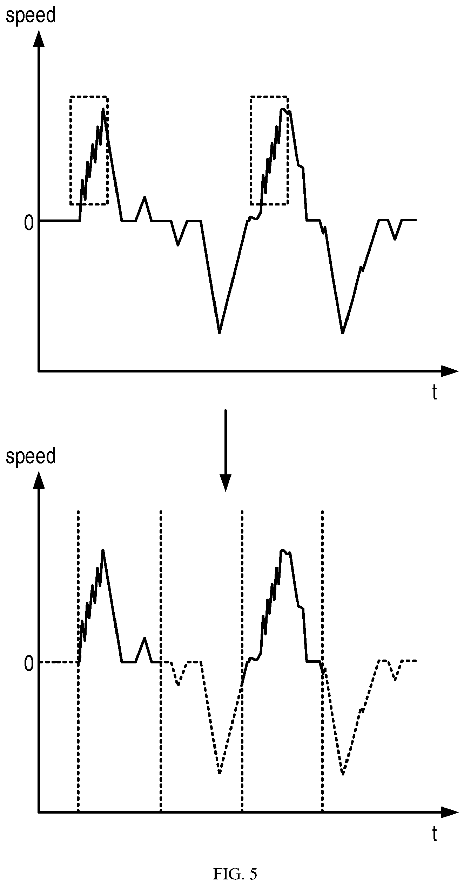

Fig. 5 illustrates a diagram showing a waveform of motion signal before and after preprocessing in accordance with some example embodiments of the present disclosure.

It can be seen that the waveform of the motion signal in the Fig. 5 is not strictly periodic, but has some fluctuations, for example referring to the part in the dotted box. Sources of these fluctuations may be, for example, a change in load or a potential failure of components. Therefore, a diagnostic analysis is needed to determine the cause of the fluctuations.

In order to protect the user's trade and technical secrets, the waveform of the motion signal as shown in Fig. 5 is segmented, and only the parts marked with solid lines are uploaded to the server.

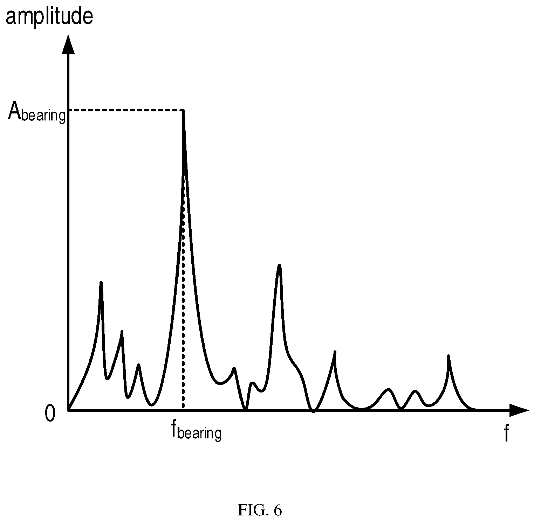

Fig. 6 illustrates a diagram showing a spectrum of motion signal in accordance with some example embodiments of the present disclosure. It can be seen that the frequency amplitudes corresponding to some frequencies in the Fig. 6 are significantly higher than the frequency amplitudes corresponding to other frequencies. Since each sub-component has an individual characteristic frequency, the diagnosis can be performed by comparing the frequency amplitude value corresponding to the characteristic frequency with a preset threshold amplitude value.

For example, Fig. 6 shows the characteristic frequency f_{bearing} of motor bearing, which is depend on the structural or dimensional parameters of the bearing, such as ball number, diameter of the bearing raceway, and the rotating speed of the bearing. Through the spectrum illustrated in Fig. 6, the frequency amplitude A_{bearing} corresponding to the characteristic frequency f_{bearing} can be determined. Such frequency amplitude A_{bearing} can be used as an indicator of whether the motor bearing has a failure, such as cracks or pitting on the bearing ball or raceway. If the frequency amplitude A_{bearing} exceeds the threshold amplitude of the motor bearing, then it can be determined that the bearing has a failure.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the process or method as described above with reference to Fig. 3 and Fig. 4. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

The above program code may be embodied on a machine readable medium, which may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. On the other hand, various features that are described in the context of a single embodiment may also be implemented in multiple embodiments separately or in any suitable sub-combination.

The specific features and acts described above are disclosed as example forms of implementing the claims.

## Claims

1. A method for diagnosing a robot, the method for diagnosing involving a local device (120) and a remote server (130), the method implemented at a local device comprising:
obtaining (210; 310) a first signal generated by a rotating component of the robot (110) during operation of the robot (110), the first signal at least comprising motion information of the rotating component;
preprocessing (220; 320) the raw data of the first signal before uploading to the server (130) to filter out a part of the motion information in the first signal, wherein preprocessing the first signal comprises determining a spectrum of the first signal and determining spectrum information from the spectrum, wherein the spectrum information includes a frequency amplitude of a subcomponent of the rotating component based on a physical characteristic and a speed of the sub-component;
sending (230; 330) the spectrum information about the preprocessed first signal to the server (130) for diagnosing the robot (110), wherein the server obtains the frequency amplitude of a sub-component of the rotating component based on the received spectrum information;
wherein obtaining the frequency amplitude at the server comprises resampling the received first signal with a sampling rate based on a speed of the rotating component; and determining the frequency amplitude from a spectrum of the resampled first signal based on a physical characteristics and a speed of the sub-component;
and
receiving (340) a second signal from the server (130), the second signal comprising diagnostic information indicating whether a sub-component of the rotating component has a failure.

2. The method of claim 1, wherein preprocessing the first signal comprises a first method, a second method, or a third method method,
wherein the first method comprises segmenting the first signal in a time domain into a plurality of parts and selecting at least one of the plurality of parts to send to the server (130);
wherein the second method comprises resampling the first signal with a sampling rate based on a speed of the rotating component, segmenting the resampled first signal into a plurality of parts and selecting at least one of the plurality of parts to send to the server (130);
wherein the third method comprises determining a spectrum of the first signal, segmenting the spectrum into a plurality of parts and selecting at least one of the plurality of parts to send to the server (130).

3. The method of claim 1, wherein the motion information indicates at least one of the following:
- a rotational speed of the rotating component;
- a control current of the rotating component;
- a torque of the rotating component; and
- an acceleration of the rotating component.

4. The method of claim 1, wherein the sub-component comprises at least one of following part:
- a gear of a gearbox;
- a shaft of a motor; and
- a bearing of the motor or gearbox.

5. The method of claim 1, wherein the method at the remote server further comprises:
receiving (240; 410) the first signal or spectrum information about the first signal from a robot (110), the first signal at least comprising motion information of a rotating component during operation;
obtaining (420) a frequency amplitude of a sub-component of the rotating component based on the received first signal or the received spectrum information;
detecting (250; 430) a failure of the sub-component by comparing the frequency amplitude with a threshold amplitude; and
sending (260; 440) a second signal to the robot (110) and/or the local device (120), the second signal comprising diagnostic information indicating whether the sub-component of the rotating component has a failure.

6. The method of claim 5, wherein detecting the failure comprises:
in response to the frequency amplitude exceeding the threshold amplitude, detecting that the sub-component has the failure.

7. The method of claim 5, wherein obtaining the frequency amplitude comprises
the physical characteristic comprising one or more structural parameters and/or one or more dimensional parameters of the sub-component.

8. The method of claim 5, wherein the threshold amplitude is empirically predetermined, or wherein the threshold amplitude is determined by machine self-learning.

9. A device (120) for diagnosing a robot, the diagnosing involving the device and a remote server (130), the device (120) comprising:
a controller (121);
a memory (122) coupled to the controller (121) and storing machine-executable instructions which, when executed by the controller, cause the robot (110) to perform acts comprising:
obtaining a first signal generated by a rotating component of the robot (110) during operation of the robot (110), the first signal comprising motion information of the rotating component;
preprocessing the raw data of the first signal before uploading to the server (130) to filter out a part of the motion information in the first signal, wherein preprocessing the first signal comprises determining a spectrum of the first signal and determining spectrum information from the spectrum, wherein the spectrum information includes a frequency amplitude of a subcomponent of the rotating component based on a physical characteristic and a speed of the sub-component;
sending spectrum information about the preprocessed first signal to a server (130) for diagnosing the robot (110), wherein the server obtains the frequency amplitude of a sub-component of the rotating component based on the received spectrum information;
wherein obtaining the frequency amplitude at the server comprises resampling the received first signal with a sampling rate based on a speed of the rotating component and determining the frequency amplitude from a spectrum of the resampled first signal based on a physical characteristics and a speed of the sub-component; and
receiving a second signal from the server (130), the second signal comprising diagnostic information which indicates a failure of a sub-component of the rotating component.

10. The device of claim 9, wherein preprocessing the first signal comprises a seventh method, an eighth method, a ninth method or a tenth method,
wherein the seventh method comprises segmenting the first signal in a time domain into a plurality of parts and selecting at least one of the plurality of parts to send to the server (130);
wherein the eighth method comprises resampling the first signal with a sampling rate based on a speed of the rotating component and segmenting the resampled first signal into a plurality of parts and selecting at least one of the plurality of parts to send to the server (130);
wherein the ninth method comprises determining a spectrum of the first signal, segmenting the spectrum into a plurality of parts, and selecting at least one of the plurality of parts to send to the server (130).

11. The device of claim 9, wherein the motion information indicates at least one of the following:
- a rotational speed of the rotating component;
- a control current of the rotating component;
- a torque of the rotating component; and
- an acceleration of the rotating component.

12. The device of claim 9, wherein the sub-component comprises at least one of following part:
- a gear of a gearbox;
- a shaft of a motor; and
- a bearing of the motor or gearbox.

13. A system for diagnosing a robot, the system including the device (120) of claim 9 and a remote server (130), the diagnosing involving the server (130) and the device (120) for sending a preprocessed first signal to the server, the server (130) comprising:
a controller (131);
a memory (132) coupled to the controller (131) and storing machine-executable instructions which, when executed by the controller, cause the server (130) to perform acts comprising:
receiving a first signal or spectrum information about the first signal from a robot (110), the first signal at least comprising motion information of a rotating component during operation;
obtaining a frequency amplitude of a sub-component of the rotating component based on the received first signal or the received spectrum information;
detecting a failure of the sub-component by comparing the frequency amplitude with a threshold amplitude; and
sending a second signal to the robot (110) and/or the device (120), the second signal comprising diagnostic information indicating whether the sub-component of the rotating component has a failure.

14. The system of claim 13, wherein detecting the failure comprises
in response to the frequency amplitude exceeding the threshold amplitude, detect that the sub-component has the failure, or
wherein the threshold amplitude is empirically predetermined, or
wherein the threshold amplitude is determined by machine self-learning.

15. The system of claim 13, wherein obtaining the frequency amplitude comprises
the physical characteristic comprising one or more structural parameters and/or one or more dimensional parameters of the sub-component.

## Patentansprüche

1. Verfahren zur Diagnose eines Roboters, wobei das Verfahren zum Diagnostizieren eine lokale Vorrichtung (120) und einen entfernten Server (130) einbezieht, wobei das an einer lokalen Vorrichtung implementierte Verfahren Folgendes umfasst:
Erhalten (210; 310) eines ersten Signals, das von einer rotierenden Komponente des Roboters (110) während des Betriebs des Roboters (110) erzeugt wird, wobei das erste Signal zumindest Bewegungsinformationen der rotierenden Komponente umfasst;
Vorverarbeiten (220; 320) der Rohdaten des ersten Signals vor dem Hochladen auf den Server (130), um einen Teil der Bewegungsinformationen in dem ersten Signal herauszufiltern, wobei das Vorverarbeiten des ersten Signals das Bestimmen eines Spektrums des ersten Signals und das Bestimmen von Spektruminformationen aus dem Spektrum umfasst, wobei die Spektruminformationen eine Frequenzamplitude einer Teilkomponente der rotierenden Komponente basierend auf einer physikalischen Eigenschaft und einer Geschwindigkeit der Teilkomponente aufweisen;
Senden (230; 330) der Spektruminformationen über das vorverarbeitete erste Signal an den Server (130) zum Diagnostizieren des Roboters (110), wobei der Server die Frequenzamplitude einer Teilkomponente der rotierenden Komponente basierend auf den empfangenen Spektruminformationen erhält;
wobei das Erhalten der Frequenzamplitude an dem Server das Neuabtasten des empfangenen ersten Signals mit einer Abtastrate basierend auf einer Geschwindigkeit der rotierenden Komponente umfasst; und Bestimmen der Frequenzamplitude aus einem Spektrum des neuabgetasteten ersten Signals basierend auf einer physikalischen Eigenschaft und einer Geschwindigkeit der Teilkomponente;
und
Empfangen (340) eines zweiten Signals von dem Server (130), wobei das zweite Signal Diagnoseinformationen umfasst, die angeben, ob eine Teilkomponente der rotierenden Komponente einen Fehler aufweist.

2. Verfahren nach Anspruch 1, wobei das Vorverarbeiten des ersten Signals ein erstes Verfahren, ein zweites Verfahren oder ein drittes Verfahren umfasst,
wobei das erste Verfahren das Segmentieren des ersten Signals in einem Zeitbereich in eine Mehrzahl von Teilen und das Auswählen mindestens eines der Mehrzahl von Teilen zum Senden an den Server (130) umfasst;
wobei das zweite Verfahren das Neuabtasten des ersten Signals mit einer Abtastrate basierend auf einer Geschwindigkeit der rotierenden Komponente, das Segmentieren des neuabgetasteten ersten Signals in eine Mehrzahl von Teilen und das Auswählen mindestens eines der Mehrzahl von Teilen zum Senden an den Server (130) umfasst;
wobei das dritte Verfahren das Bestimmen eines Spektrums des ersten Signals, das Segmentieren des Spektrums in eine Mehrzahl von Teilen und das Auswählen mindestens eines der Mehrzahl von Teilen zum Senden an den Server (130) umfasst.

3. Verfahren nach Anspruch 1, wobei die Bewegungsinformationen mindestens eines der Folgenden angeben:
- eine Drehzahl der rotierenden Komponente;
- einen Steuerstrom der rotierenden Komponente;
- ein Drehmoment der rotierenden Komponente; und
- eine Beschleunigung der rotierenden Komponente.

4. Verfahren nach Anspruch 1, wobei die Teilkomponente mindestens eines der folgenden Teile umfasst:
- ein Zahnrad eines Getriebes;
- eine Welle eines Motors; und
- ein Lager des Motors oder Getriebes.

5. Verfahren nach Anspruch 1, wobei das Verfahren an dem entfernten Server ferner Folgendes umfasst:
Empfangen (240; 410) des ersten Signals oder von Spektruminformationen über das erste Signal von einem Roboter (110), wobei das erste Signal zumindest Bewegungsinformationen einer rotierenden Komponente während des Betriebs umfasst;
Erhalten (420) einer Frequenzamplitude einer Teilkomponente der rotierenden Komponente basierend auf dem empfangenen ersten Signal oder den empfangenen Spektruminformationen;
Detektieren (250; 430) eines Fehlers der Teilkomponente durch Vergleichen der Frequenzamplitude mit einer Schwellenamplitude; und
Senden (260; 440) eines zweiten Signals an den Roboter (110) und/oder die lokale Vorrichtung (120), wobei das zweite Signal Diagnoseinformationen umfasst, die angeben, ob die Teilkomponente der rotierenden Komponente einen Fehler aufweist.

6. Verfahren nach Anspruch 5, wobei das Detektieren des Fehlers Folgendes umfasst:
als Reaktion darauf, dass die Frequenzamplitude die Schwellenamplitude überschreitet, Detektieren, dass die Teilkomponente den Fehler aufweist.

7. Verfahren nach Anspruch 5, wobei das Erhalten der Frequenzamplitude umfasst,
dass die physikalische Eigenschaft einen oder mehrere strukturelle Parameter und/oder einen oder mehrere dimensionale Parameter der Teilkomponente umfasst.

8. Verfahren nach Anspruch 5, wobei die Schwellenamplitude empirisch vorbestimmt wird, oder wobei die Schwellenamplitude durch maschinelles Selbstlernen bestimmt wird.

9. Vorrichtung (120) zum Diagnostizieren eines Roboters, wobei das Diagnostizieren die Vorrichtung und einen entfernten Server (130) einbezieht, wobei die Vorrichtung (120) Folgendes umfasst:
eine Steuerung (121);
einen Speicher (122), der mit der Steuerung (121) gekoppelt ist und maschinenausführbare Anweisungen speichert, die, wenn sie von der Steuerung ausgeführt werden, den Roboter (110) veranlassen, Handlungen durchzuführen, die Folgendes umfassen:
Erhalten eines ersten Signals, das von einer rotierenden Komponente des Roboters (110) während des Betriebs des Roboters (110) erzeugt wird, wobei das erste Signal Bewegungsinformationen der rotierenden Komponente umfasst;
Vorverarbeiten der Rohdaten des ersten Signals vor dem Hochladen auf den Server (130), um einen Teil der Bewegungsinformationen in dem ersten Signal herauszufiltern, wobei das Vorverarbeiten des ersten Signals das Bestimmen eines Spektrums des ersten Signals und das Bestimmen von Spektruminformationen aus dem Spektrum umfasst, wobei die Spektruminformationen eine Frequenzamplitude einer Teilkomponente der rotierenden Komponente basierend auf einer physikalischen Eigenschaft und einer Geschwindigkeit der Teilkomponente beinhalten;
Senden von Spektruminformationen über das vorverarbeitete erste Signal an einen Server (130) zum Diagnostizieren des Roboters (110), wobei der Server die Frequenzamplitude einer Teilkomponente der rotierenden Komponente basierend auf den empfangenen Spektruminformationen erhält;
wobei das Erhalten der Frequenzamplitude an dem Server das Neuabtasten des empfangenen ersten Signals mit einer Abtastrate basierend auf einer Geschwindigkeit der rotierenden Komponente und das Bestimmen der Frequenzamplitude aus einem Spektrum des neuabgetasteten ersten Signals basierend auf einer physikalischen Eigenschaft und einer Geschwindigkeit der Teilkomponente umfasst; und
Empfangen eines zweiten Signals von dem Server (130), wobei das zweite Signal Diagnoseinformationen umfasst, die einen Fehler einer Teilkomponente der rotierenden Komponente angeben.

10. Vorrichtung nach Anspruch 9, wobei das Vorverarbeiten des ersten Signals ein siebtes Verfahren, ein achtes Verfahren, ein neuntes Verfahren oder ein zehntes Verfahren umfasst,
wobei das siebte Verfahren das Segmentieren des ersten Signals in einem Zeitbereich in eine Mehrzahl von Teilen und das Auswählen mindestens eines der Mehrzahl von Teilen zum Senden an den Server (130) umfasst;
wobei das achte Verfahren das Neuabtasten des ersten Signals mit einer Abtastrate basierend auf einer Geschwindigkeit der rotierenden Komponente und das Segmentieren des neuabgetasteten ersten Signals in eine Mehrzahl von Teilen und das Auswählen mindestens eines der Mehrzahl von Teilen zum Senden an den Server (130) umfasst;
wobei das neunte Verfahren das Bestimmen eines Spektrums des ersten Signals, das Segmentieren des Spektrums in eine Mehrzahl von Teilen und das Auswählen mindestens eines der Mehrzahl von Teilen zum Senden an den Server (130) umfasst.

11. Vorrichtung nach Anspruch 9, wobei die Bewegungsinformationen mindestens eines der Folgenden angeben:
- eine Drehzahl der rotierenden Komponente;
- einen Steuerstrom der rotierenden Komponente;
- ein Drehmoment der rotierenden Komponente; und
- eine Beschleunigung der rotierenden Komponente.

12. Vorrichtung nach Anspruch 9, wobei die Teilkomponente mindestens eines der folgenden Teile umfasst:
- ein Zahnrad eines Getriebes;
- eine Welle eines Motors; und
- ein Lager des Motors oder Getriebes.

13. System zum Diagnostizieren eines Roboters, wobei das System die Vorrichtung (120) nach Anspruch 9 und einen entfernten Server (130) aufweist, wobei das Diagnostizieren den Server (130) und die Vorrichtung (120) zum Senden eines vorverarbeiteten ersten Signals an den Server einbezieht, wobei der Server (130) Folgendes umfasst:
eine Steuerung (131);
einen Speicher (132), der mit der Steuerung (131) gekoppelt ist und maschinenausführbare Anweisungen speichert, die, wenn sie von der Steuerung ausgeführt werden, den Server (130) veranlassen, Handlungen durchzuführen, die Folgendes umfassen:
Empfangen eines ersten Signals oder von Spektruminformationen über das erste Signal von einem Roboter (110), wobei das erste Signal zumindest Bewegungsinformationen einer rotierenden Komponente während des Betriebs umfasst;
Erhalten einer Frequenzamplitude einer Teilkomponente der rotierenden Komponente basierend auf dem empfangenen ersten Signal oder den empfangenen Spektruminformationen;
Detektieren eines Fehlers der Teilkomponente durch Vergleichen der Frequenzamplitude mit einer Schwellenamplitude; und
Senden eines zweiten Signals an den Roboter (110) und/oder die Vorrichtung (120), wobei das zweite Signal Diagnoseinformationen umfasst, die angeben, ob die Teilkomponente der rotierenden Komponente einen Fehler aufweist.

14. System nach Anspruch 13, wobei das Detektieren des Fehlers Folgendes umfasst:
als Reaktion darauf, dass die Frequenzamplitude die Schwellenamplitude überschreitet, Detektieren, dass die Teilkomponente den Fehler aufweist, oder
wobei die Schwellenamplitude empirisch vorbestimmt wird, oder
wobei die Schwellenamplitude durch maschinelles Selbstlernen bestimmt wird.

15. System nach Anspruch 13, wobei das Erhalten der Frequenzamplitude umfasst, dass die physikalische Eigenschaft einen oder mehrere strukturelle Parameter und/oder einen oder mehrere dimensionale Parameter der Teilkomponente umfasst.

## Revendications

1. Procédé pour diagnostiquer un robot, le procédé pour diagnostiquer impliquant un dispositif local (120) et un serveur à distance (130), le procédé étant mis en œuvre au niveau d'un dispositif local comprenant :
l'obtention (210 ; 310) d'un premier signal généré par un composant rotatif du robot (110) durant le fonctionnement du robot (110), le premier signal comprenant au moins des informations de mouvement du composant rotatif ;
le prétraitement (220 ; 320) des données brutes du premier signal avant le téléchargement sur le serveur (130) pour éliminer par filtrage une partie des informations de mouvement dans le premier signal, dans lequel le prétraitement du premier signal comprend la détermination d'un spectre du premier signal et la détermination d'informations de spectre à partir du spectre, dans lequel les informations de spectre incluent une amplitude de fréquence d'un sous-composant du composant rotatif basée sur une caractéristique physique et une vitesse du sous-composant ;
l'envoi (230 ; 330) des informations de spectre concernant le premier signal prétraité au serveur (130) pour diagnostiquer le robot (110),
dans lequel le serveur obtient l'amplitude de fréquence d'un sous-composant du composant rotatif sur la base des informations de spectre reçues ;
dans lequel l'obtention de l'amplitude de fréquence au niveau du serveur comprend le rééchantillonnage du premier signal reçu avec un cadence d'échantillonnage basée sur une vitesse du composant rotatif ; et la détermination de l'amplitude de fréquence, à partir d'un spectre du premier signal rééchantillonné, basée sur une caractéristique physique et une vitesse du sous-composant ;
et
la réception (340) d'un second signal en provenance du serveur (130), le second signal comprenant des informations de diagnostic indiquant si un sous-composant du composant rotatif a une défaillance.

2. Procédé de la revendication 1, dans lequel le prétraitement du premier signal comprend un premier procédé, un deuxième procédé, ou un troisième procédé, dans lequel le premier procédé comprend la segmentation du premier signal dans un domaine temporel en une pluralité de parties et la sélection d'au moins une de la pluralité de parties à envoyer au serveur (130) ;
dans lequel le deuxième procédé comprend le rééchantillonnage du premier signal avec une cadence d'échantillonnage basée sur une vitesse du composant rotatif, la segmentation du premier signal rééchantillonné en une pluralité de parties, et la sélection d'au moins une de la pluralité de parties à envoyer au serveur (130) ;
dans lequel le troisième procédé comprend la détermination d'un spectre du premier signal, la segmentation du spectre en une pluralité de parties, et la sélection d'au moins une de la pluralité de parties à envoyer au serveur (130).

3. Procédé de la revendication 1, dans lequel les informations de mouvement indiquent au moins un élément parmi ce qui suit :
- une vitesse de rotation du composant rotatif ;
- un courant de commande du composant rotatif ;
- un couple du composant rotatif ; et
- une accélération du composant rotatif.

4. Procédé de la revendication 1, dans lequel le sous-composant comprend au moins une des parties suivantes :
- une pièce d'engrenage d'une boîte d'engrenages ;
- un arbre d'un moteur ; et
- un palier du moteur ou de la boîte d'engrenages.

5. Procédé de la revendication 1, dans lequel le procédé au niveau du serveur à distance comprend en outre :
la réception (240 ; 410) du premier signal ou des informations de spectre concernant le premier signal en provenance d'un robot (110), le premier signal comprenant au moins des informations de mouvement d'un composant rotatif durant le fonctionnement ;
l'obtention (420) d'une amplitude de fréquence d'un sous-composant du composant rotatif sur la base du premier signal reçu ou des informations de spectre reçues ;
la détection (250 ; 430) d'une défaillance du sous-composant en comparant l'amplitude de fréquence à une amplitude seuil ; et
l'envoi (260 ; 440) d'un second signal au robot (110) et/ou au dispositif local (120), le second signal comprenant des informations de diagnostic indiquant si le sous-composant du composant rotatif a une défaillance.

6. Procédé de la revendication 5, dans lequel la détection de la défaillance comprend :
en réponse au fait que l'amplitude de fréquence dépasse l'amplitude seuil, la détection que le sous-composant a la défaillance.

7. Procédé de la revendication 5, dans lequel l'obtention de l'amplitude de fréquence comprend le fait suivant
la caractéristique physique comprend un ou plusieurs paramètres structuraux et/ou un ou plusieurs paramètres dimensionnels du sous-composant.

8. Procédé de la revendication 5, dans lequel l'amplitude seuil est prédéterminée empiriquement, ou dans lequel l'amplitude seuil est déterminée par auto-apprentissage machine.

9. Dispositif (120) pour diagnostiquer un robot, le diagnostic impliquant le dispositif et un serveur à distance (130), le dispositif (120) comprenant :
une unité de commande (121) ;
une mémoire (122) couplée à l'unité de commande (121) et stockant des instructions exécutables par machine qui, lorsqu'elles sont exécutées par l'unité de commande, amènent le robot (110) à réaliser des actions comprenant :
l'obtention d'un premier signal généré par un composant rotatif du robot (110) durant le fonctionnement du robot (110), le premier signal comprenant des informations de mouvement du composant rotatif ;
le prétraitement des données brutes du premier signal avant le téléchargement sur le serveur (130) pour éliminer par filtrage une partie des informations de mouvement dans le premier signal, dans lequel le prétraitement du premier signal comprend la détermination d'un spectre du premier signal et la détermination d'informations de spectre à partir du spectre, dans lequel les informations de spectre incluent une amplitude de fréquence d'un sous-composant du composant rotatif basée sur une caractéristique physique et une vitesse du sous-composant ;
l'envoi d'informations de spectre concernant le premier signal prétraité à un serveur (130) pour diagnostiquer le robot (110),
dans lequel le serveur obtient l'amplitude de fréquence d'un sous-composant du composant rotatif sur la base des informations de spectre reçues ;
dans lequel l'obtention de l'amplitude de fréquence au niveau du serveur comprend le rééchantillonnage du premier signal reçu avec une cadence d'échantillonnage basée sur une vitesse du composant rotatif et la détermination de l'amplitude de fréquence, à partir d'un spectre du premier signal rééchantillonné, basée sur une caractéristique physique et une vitesse du sous-composant ; et
la réception d'un second signal en provenance du serveur (130), le second signal comprenant des informations de diagnostic qui indiquent une défaillance d'un sous-composant du composant rotatif.

10. Dispositif de la revendication 9, dans lequel le prétraitement du premier signal comprend un septième procédé, un huitième procédé, un neuvième procédé, ou un dixième procédé,
dans lequel le septième procédé comprend la segmentation du premier signal dans un domaine temporel en une pluralité de parties et la sélection d'au moins un de la pluralité de parties à envoyer au serveur (130) ;
dans lequel le huitième procédé comprend le rééchantillonnage du premier signal avec une cadence d'échantillonnage basée sur une vitesse du composant rotatif et la segmentation du premier signal rééchantillonné en une pluralité de parties et la sélection d'au moins une de la pluralité de parties à envoyer au serveur (130) ;
dans lequel le neuvième procédé comprend la détermination d'un spectre du premier signal, la segmentation du spectre en une pluralité de parties, et la sélection d'au moins une de la pluralité de parties à envoyer au serveur (130).

11. Dispositif de la revendication 9, dans lequel les informations de mouvement indiquent au moins un élément parmi ce qui suit :
- une vitesse de rotation du composant rotatif ;
- un courant de commande du composant rotatif ;
- un couple du composant rotatif ; et
- une accélération du composant rotatif.

12. Dispositif de la revendication 9, dans lequel le sous-composant comprend au moins une des parties suivantes :
- une pièce d'engrenage d'une boîte d'engrenages ;
- un arbre d'un moteur ; et
- un palier du moteur ou de la boîte d'engrenages.

13. Système pour diagnostiquer un robot, le système incluant le dispositif (120) de la revendication 9 et un serveur à distance (130), le diagnostic impliquant le serveur (130) et le dispositif (120) pour envoyer un premier signal prétraité au serveur, le serveur (130) comprenant :
une unité de commande (131) ;
une mémoire (132) couplée à l'unité de commande (131) et stockant des instructions exécutables par machine qui, lorsqu'elles sont exécutées par l'unité de commande, amènent le serveur (130) à réaliser des actions comprenant :
la réception d'un premier signal ou d'informations de spectre concernant le premier signal en provenant d'un robot (110), le premier signal comprenant au moins des informations de mouvement d'un composant rotatif durant le fonctionnement ;
l'obtention d'une amplitude de fréquence d'un sous-composant du composant rotatif sur la base du premier signal reçu ou des informations de spectre reçues ;
la détection d'une défaillance du sous-composant en comparant l'amplitude de fréquence à une amplitude seuil ; et
l'envoi d'un second signal au robot (110) et/ou au dispositif (120), le second signal comprenant des informations de diagnostic indiquant si le sous-composant du composant rotatif a une défaillance.

14. Système de la revendication 13, dans lequel la détection de la défaillance comprend
en réponse au fait que l'amplitude de fréquence dépasse l'amplitude seuil, la détection que le sous-composant a la défaillance, ou
dans lequel l'amplitude seuil est prédéterminée empiriquement, ou
dans lequel l'amplitude seuil est déterminée par auto-apprentissage machine.

15. Système de la revendication 13, dans lequel l'obtention de l'amplitude de fréquence comprend le fait suivant
la caractéristique physique comprend un ou plusieurs paramètres structuraux et/ou un ou plusieurs paramètres dimensionnels du sous-composant.
